# EUROPEAN PATENT APPLICATION

(11) **EP 4 394 337 A1**
(43) Date of publication of application: **03.07.2024**
(21) Application number: 22217074.8
(22) Date of filing: 29.12.2022
(51) Int. Cl.: G01H 9/00, G10K 11/178, H04R 23/00

(54) **AUDIO SIGNAL PROCESSING**

(71) Applicant: Nokia Technologies Oy, 02610 Espoo (FI)
(72) Inventor: ERONEN, Antti Johannes, Tampere (FI); LEHTINIEMI, Arto Juhani, Lempäälä (FI); LAAKSONEN, Lasse Juhani, Tampere (FI)
(74) Representative: Nokia EPO representatives

(57) **Abstract**

Example embodiments relate to an apparatus and method relating to audio signal processing. For example, the method may comprise receiving, at a first time, an optical signal representing a sound emitted by a remote sound source, providing reference data representing the sound using the optical signal, receiving, at a second time after the first time, a first audio signal representing the sound emitted by the remote sound source and providing a target audio signal, representing, or including, a modified version of the first audio signal, based at least in part on the reference data and the time delay between the first time and the second time. The method may also comprise outputting the target audio signal at, or momentarily after, the second time.

## Description

### Field

Example embodiments relate to audio signal processing, for example modifying audio signals for noise reduction or enhancement.

### Background

It is known to modify audio signals for various purposes, such as in an active noise cancellation (ANC) system. A set of headphones with an ANC system may comprise one or more microphones which may capture unwanted environmental noise. The ANC system may attempt to attenuate the unwanted environmental noise but there may be limitations to this.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus, comprising: means for receiving, at a first time, an optical signal representing a sound emitted by a remote sound source; means for providing reference data representing the sound using the optical signal; means for receiving, at a second time after the first time, a first audio signal representing the sound emitted by the remote sound source; means for providing a target audio signal, representing, or including, a modified version of the first audio signal, based at least in part on the reference data and the time delay between the first time and the second time; and means for outputting the target audio signal at, or momentarily after, the second time.

The reference data may represent a reference audio signal and wherein the time delay may be computed based on identifying a corresponding part of the reference audio signal and the first audio signal.

The reference data may represent a reference audio signal and wherein the providing means may be configured to modify the first audio signal based on corresponding parts of the reference audio signal to represent, or include in, the target audio signal.

The apparatus may be configured to perform noise cancellation by the providing means generating, based on the reference audio signal, a cancellation signal and subtracting corresponding parts of the cancellation signal from the first audio signal to represent, or include in, the target audio signal.

The providing means may be configured to perform audio enhancement by combining corresponding parts of the reference audio signal and the first audio signal to provide the target audio signal.

The apparatus may further comprise means for filtering the reference audio signal using one or more predetermined filter characteristics, and wherein the providing means is considered to perform audio enhancement by combining corresponding parts of the filtered reference audio signal and the first audio signal.

The apparatus may further comprise means for receiving a second audio signal representing sound emitted by a second remote sound source, and wherein the target audio signal comprises a mix of the second audio signal and the modified first audio signal.

The providing means may comprise a machine-learned, ML, model configured to receive, as input, at least the reference audio signal and to generate, as output, either: (i) a modifying signal based on the reference audio signal for being subtracted from, or combined with, corresponding parts of the first audio signal based on the time delay to produce the target audio signal; or (ii) the target audio signal.

The ML model may be configured to generate the target audio signal, wherein the ML model is trained using training data comprising mappings between: (i) reference audio signals representing a plurality of optically-received sounds; (ii) required target audio signals corresponding to the respective reference audio signals.

The means for receiving the optical signal may comprise at least one camera for capturing a speckle pattern representing the sound emitted by the remote sound source.

The means for receiving the optical signal may comprise first and second cameras, each for capturing a video of the speckle pattern representing the sound emitted by the remote sound source, the first camera having a rolling shutter sensor for capturing sequential rows or columns of pixels representing the speckle pattern and the second camera having a global shutter sensor for simultaneously capturing pixels represent reference frames of at least a majority of the speckle pattern, the reference audio signal being determined based on comparing the captured row or column pixels and the simultaneously captured reference frame pixels within a common time frame.

The first camera may have a lower frame rate than the second camera.

The first camera may have a frame rate of, or in the region of, 6o frames per second and the second camera has a frame rate of, or in the region of, 130 frames per second.

The apparatus may further comprise means for illuminating the remote sound source with a laser beam for producing the speckle pattern representing the sound emitted by the remote sound source.

According to a second aspect, there is described a method, comprising: receiving, at a first time, an optical signal representing a sound emitted by a remote sound source; providing reference data representing the sound using the optical signal; receiving, at a second time after the first time, a first audio signal representing sound emitted by the remote sound source; providing a target audio signal, representing, or including, a modified version of the first audio signal, based at least in part on the reference data and the time delay between the first time and the second time; and outputting the target audio signal at, or momentarily after, the second time.

The reference data may represent a reference audio signal and wherein the time delay may be computed based on identifying a corresponding part of the reference audio signal and the first audio signal.

The reference data may represent a reference audio signal and wherein the providing means may be configured to modify the first audio signal based on corresponding parts of the reference audio signal to represent, or include in, the target audio signal.

The method may comprise performing noise cancellation by generating, based on the reference audio signal, a cancellation signal and subtracting corresponding parts of the cancellation signal from the first audio signal to represent, or include in, the target audio signal.

The method may comprise performing audio enhancement by combining corresponding parts of the reference audio signal and the first audio signal to provide the target audio signal.

The method may comprise filtering the reference audio signal using one or more predetermined filter characteristics, and wherein audio enhancement may be performed by combining corresponding parts of the filtered reference audio signal and the first audio signal.

The method may further comprise receiving a second audio signal representing sound emitted by a second remote sound source, and wherein the target audio signal comprises a mix of the second audio signal and the modified first audio signal.

The method may be performed using a machine-learned, ML, model for receiving, as input, at least the reference audio signal and generating, as output, either: (i) a modifying signal based on the reference audio signal for being subtracted from, or combined with, corresponding parts of the first audio signal based on the time delay to produce the target audio signal; or (ii) the target audio signal.

The ML model may generate the target audio signal, wherein the ML model is trained using training data comprising mappings between: (i) reference audio signals representing a plurality of optically-received sounds; (ii) required target audio signals corresponding to the respective reference audio signals.

Receiving the optical signal may comprise using at least one camera for capturing a speckle pattern representing the sound emitted by the remote sound source.

Receiving the optical signal may comprise using first and second cameras, each for capturing a video of the speckle pattern representing the sound emitted by the remote sound source, the first camera having a rolling shutter sensor for capturing sequential rows or columns of pixels representing the speckle pattern and the second camera having a global shutter sensor for simultaneously capturing pixels represent reference frames of at least a majority of the speckle pattern, the reference audio signal being determined based on comparing the captured row or column pixels and the simultaneously captured reference frame pixels within a common time frame.

The first camera may have a lower frame rate than the second camera.

The first camera may have a frame rate of, or in the region of, 6o frames per second and the second camera has a frame rate of, or in the region of, 130 frames per second.

The method may further comprise illuminating the remote sound source with a laser beam for producing the speckle pattern representing the sound emitted by the remote sound source.

According to another aspect, there may be provided an apparatus comprising at least one processor, at least one memory directly connected to the at least one processor, the at least one memory including computer program code, and the at least one processor, with the at least one memory and the computer program code being arranged to perform: receiving, at a first time, an optical signal representing a sound emitted by a remote sound source; providing reference data representing the sound using the optical signal; receiving, at a second time after the first time, a first audio signal representing sound emitted by the remote sound source; providing a target audio signal, representing, or including, a modified version of the first audio signal, based at least in part on the reference data and the time delay between the first time and the second time; and outputting the target audio signal at, or momentarily after, the second time.

According to another aspect, there is provided a computer program product comprising a set of instructions which, when executed on an apparatus, is configured to cause the apparatus to carry out the method of receiving, at a first time, an optical signal representing a sound emitted by a remote sound source; providing reference data representing the sound using the optical signal; receiving, at a second time after the first time, a first audio signal representing sound emitted by the remote sound source; providing a target audio signal, representing, or including, a modified version of the first audio signal, based at least in part on the reference data and the time delay between the first time and the second time; and outputting the target audio signal at, or momentarily after, the second time.

According to another aspect, there is provided a non-transitory computer readable medium comprising program instructions stored thereon for performing a method, comprising: receiving, at a first time, an optical signal representing a sound emitted by a remote sound source; providing reference data representing the sound using the optical signal; receiving, at a second time after the first time, a first audio signal representing sound emitted by the remote sound source; providing a target audio signal, representing, or including, a modified version of the first audio signal, based at least in part on the reference data and the time delay between the first time and the second time; and outputting the target audio signal at, or momentarily after, the second time.

According to another aspect, there is provided an apparatus comprising: at least one processor; and at least one memory including computer program code which, when executed by the at least one processor, causes the apparatus to: receive, at a first time, an optical signal representing a sound emitted by a remote sound source; to provide reference data representing the sound using the optical signal; to receive, at a second time after the first time, a first audio signal representing sound emitted by the remote sound source; to provide a target audio signal, representing, or including, a modified version of the first audio signal, based at least in part on the reference data and the time delay between the first time and the second time; and to output the target audio signal at, or momentarily after, the second time.

### Drawings

Embodiments will be described, by way of non-limiting example, with reference to the accompanying drawings as follows:
FIG. 1 is a block diagram of a system which may be useful for understanding one or more example embodiments;
FIG. 2 is a schematic view of part of the FIG. 1 system which may be useful for understanding one or more example embodiments;
FIG. 3 is a view of a speckle pattern which may be useful for understanding one or more example embodiments;
FIG. 4 is a flow diagram showing operations according to one or more example embodiments;
FIGs. 5a - 5c are example waveforms that may be used by an apparatus according to one or more example embodiments;
FIG. 6a - 6b are example waveforms that may be produced by an apparatus according to one or more example embodiments;
FIG. 7 is a schematic view of a camera system that may be used in performance of one or more example embodiments;
FIG. 8 is a schematic view of a machine learning system that may be used in performance of one or more example embodiments;
FIG. 9 is a block diagram of an apparatus according to one or more example embodiments; and
FIG. 10 is a non-transitory medium that may be used to store computer-readable instructions that, when executed by one or more processors, may perform operations according to one or more example embodiments.

### Detailed Description

Example embodiments relate to audio signal processing, for example for modifying audio signals for noise cancellation or enhancement.

Active noise cancellation (ANC) is an example of audio signal modification. An audio signal may be captured by one or more microphones on a user device such as a set of headphones, earphones, earbuds or a head mounted display (HMD) for extended reality (XR) applications. The audio signal may represent unwanted environmental noise which may detract from a user's experience. For example, the user may be concentrating on a task such as analysing information presented on screens of the HMD or listening to other, wanted sounds. They may wish for little or no external sounds from all or certain external sound sources.

Other examples of audio signal modification may involve audio enhancement, where a captured audio signal is added rather than subtracted, or filtering, e.g. using an equalizing filter characteristic.

Audio signal modification methods are most effective when unwanted sounds have static sound characteristics. However, unwanted sounds are often dynamic and change their sound characteristics often and sometimes quite fast. This may cause issues with existing ANC systems, or similar, because it takes some time for removal operations to "catch-up" with changes in the corresponding received signal. The perceived effect is an annoying leakage of unwanted sounds when sound characteristics change.

Example embodiments may enable faster-reacting modifications, including in ANC applications, but may also be applicable to audio enhancement and filtering applications.

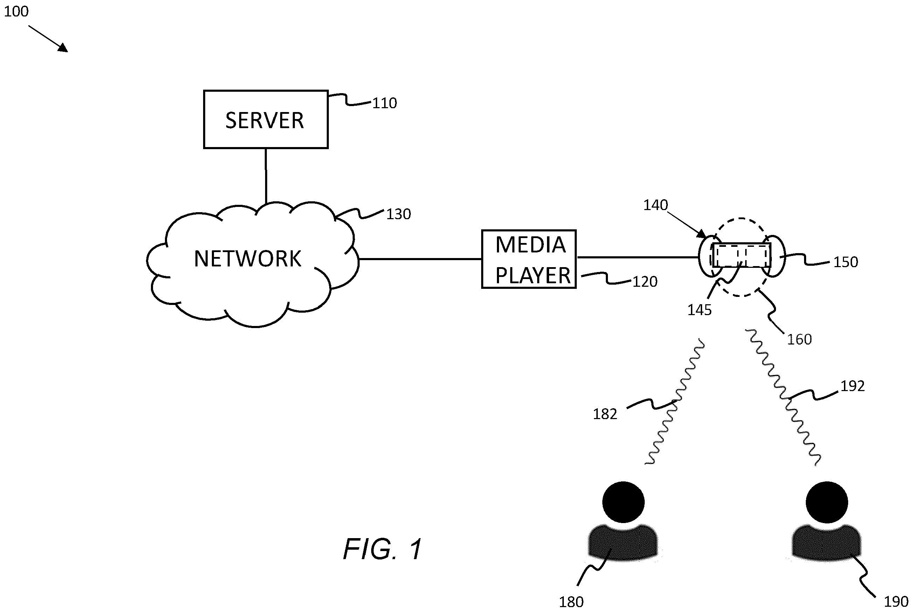

FIG. 1 is a block diagram of a system 100 which may be useful for understanding example embodiments.

The system 100 may comprise a server 110, a media player 120, a network 130 and a user device in the form of a Head Mounted Display (HMD) 140 associated with a first user 160. The HMD 140 includes a display portion 145 comprising first and second screens (shown in broken line) and a set of headphones 150 comprising first and second loudspeakers. The HMD 140 is shown when worn by the first user 160.

The server 110 may be connected to the media player 120 by means of the network 130 for sending data, e.g. video and audio data, to the media player 120. The server 110 may for example send the data to the media player 120 responsive to one or more data requests sent by the media player 120. For example, the media player 120 may transmit to the server 110 an indication of a position associated with the first user 160, and the server may process and transmit back to the media player 120 video and audio data responsive to the received position, which may be in real-time or near real-time. This may be by means of any suitable streaming data protocol. Alternatively, or additionally, the server 110 may provide one or more files representing video and audio data to the media player 120 for storage and processing thereat. At the media player 120, the video and audio may be processed, rendered and output to the display portion 145 and headphones 150 respectively. In example embodiments, the HMD 140 may comprise head tracking sensors for indicating to the media player 120, using any suitable method, a current position of the first user 160, e.g., one or both of the orientation and spatial position of the user's head, in order to determine how the video and audio data is to be rendered and output.

In some embodiments, the media player 120 may comprise part of the HMD 140.

The network 130 may be any suitable data communications network including, for example, one or more of a radio access network (RAN), such as any of a 3G, 4G, 5G or future generation mobile network, whereby communications is via one or more base stations. The network 130 may alternatively be a WiFi network whereby communications is via one or more access points, or a short-range network such as one using the Bluetooth or Zigbee protocol.

The HMD 140 may be configured to output extended Reality (XR) content, for example an immersive virtual space which may or may not be accompanied by a corresponding audio track which may change based on movement of the first user 160. Example embodiments are not, however, limited to a HMD 140 user device or indeed user devices that display video. Example embodiments are concerned mainly with audio signal processing and hence any form of user device comprising loudspeakers for output of audio data may be appropriate. Examples include a set of headphones, earphones, earbuds, another form of wearable device, or mobile device such as a smartphone.

FIG. 1 also shows environmental audio sources in the form of first and second noise sources 180, 190. The first and second noise sources 180, 190 may, for example, be people involved in a conversation which produces respective sound waves 182, 192 that the first user 160 finds disturbing, or unwanted, when concentrating on something else. This may be alleviated by an Active Noise Cancelling (ANC) system that may form part of the user device, i.e. the HMD 140 in this example.

The HMD 140 may further comprise one or more microphones (not shown in FIG. 1) for capturing the respective sound waves 182, 192 and then, according to one or more example embodiments, performing modifications to reduce or eliminate their presence or perception by the first user 160. The one or more microphones may also be used as part of a transparency (or hear-through) mode of operation in which some environmental sounds, such as someone trying to get the first user's attention, can be heard.

Example embodiments may overcome issues associated with annoying leakage of environmental noise due to the required "catch up" with dynamically changing noises.

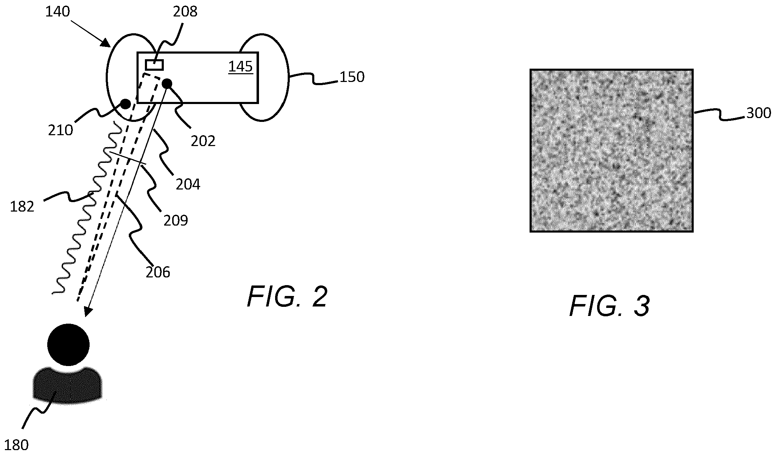

FIG. 2 is a schematic diagram of part of the FIG. 1 system 100 in which the HMD 140 is adapted and may operate according to example embodiments. The same or similar adaptations and operations may be used and performed by other forms of user device, examples of which are mentioned above.

The HMD 140 may comprise an optical source (any source that emits light) such as a coherent light source 202 for emitting a laser beam 204 towards the external environment.

In this case, the coherent light source 202 is a laser emitter which emits a laser beam 204, in this case towards the first noise source 180 or a nearby surface thereof.

In some embodiments, multiple laser emitters may be provided for directing respective lasers beams towards different environmental noise sources, e.g. the first and second noise sources 180, 190 shown in FIG. 1.

In some embodiments, the coherent light source 202 may be a scanning laser emitter in which the laser beam 204 scans all or a larger part of the environment and hence may, at respective times, also emit the laser beam towards other environmental noise sources including the second noise source 190 or a nearby surface thereof.

The HMD 140 may also comprise a camera system 208 comprising one or more camera sensors for capturing reflected light, i.e. an optical signal 206.

In the FIG. 2 case, the optical signal 206 is due to the laser beam 204 reaching, in this case, the first noise source 180 and reflecting back towards the camera system 208. This may produce a two-dimensional speckle pattern indicative of sounds produced by the first noise source 180. An example speckle pattern 300 is shown in FIG. 3, comprising a set of dispersed light points. The camera system 208 may image a focal plane 209 between the first noise source 180 and the camera system for capturing the speckle pattern 300.

As is known, when noise sources make sounds, such as when the first noise source 180 is a user speaking, their mouth or other surface(s) carried by them or close to them will vibrate due to the corresponding sound wave 182. Over time, the speckle pattern will distort as the sounds change. Hence, a laser beam 204 reflected by the first noise source 180 will produce a speckle pattern 300 that distorts due to the vibration; the speckle pattern distortions can be captured by a video camera and decoded over time using known techniques to estimate reference data or a reference signal which models or estimates the audio signal corresponding to the sound wave 182. The concept is known as visual vibrometry, and the concept basically involves capture of vibrations, even imperceptible object vibrations, which can be optically amplified by imaging the displacement of the speckle pattern 300 over time.

The coherent light source 202 need not be provided on the HMD 140; it can be provided by another device, such as a remote user device (e.g. a smartphone) or it may be a stand-alone coherent light source. Multiple coherent light sources may be provided. The produced speckle pattern(s) comprises the information needed to model or estimate audio signals corresponding to the associated sound wave(s).

The HMD 140 may also comprise one or more microphones 210 for capturing audio signals directly using sound pressure waves; in this case, the one or more microphones transduce the sound wave 182 from the first noise source 180 to produce a first audio signal.

It will be appreciated that the one or more microphones 210 may also transduce sounds from other noise sources, e.g. the sound wave 192 from the second noise source 190 shown in FIG. 1, and possibly one or more wanted sound sources as part of a transparency or hear-through mode of operation. In the latter case, the coherent light source 202 may not be directed at the one or more sound sources as it is not required to attenuate their sounds.

Example embodiments take advantage of the fact that light travels faster than sound. Light travels through air at 300,000 km/s whereas sound travels at about 0.3 km/s.

In general overview, it is possible to use the optical signal 206, and more particularly the speckle pattern 300 in this example, as reference data for producing a target audio signal for output. The target audio signal may be a modified (e.g. attenuated, enhanced and/or filtered) version of the later-arriving first audio signal, and may take into account a time delay *Δt* between arrival of the reflected light at the camera system 208 and the first audio signal at the one or more microphones 210.

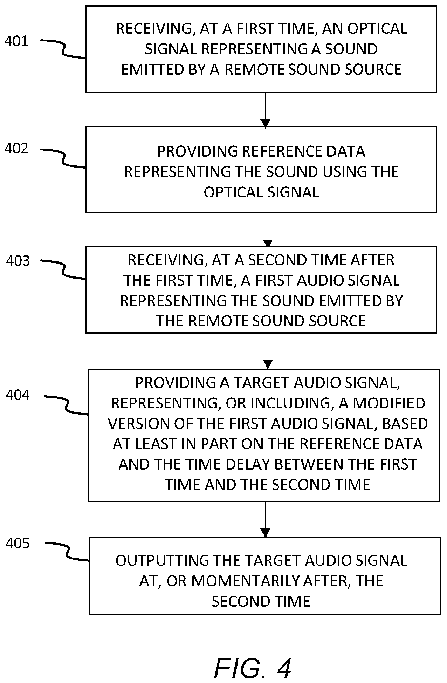

FIG. 4 is a flow diagram showing operations that may be performed by one or more example embodiments. The operations may be performed by hardware, software, firmware or a combination thereof. The operations may be performed by one, or respective, means, a means being any suitable means such as one or more processors or controllers in combination with computer-readable instructions provided on one or more memories.

A first operation 401 may comprise receiving, at a first time, an optical signal representing a sound emitted by a remote sound source. The optical signal may be a reflected optical signal 206 shown in FIG. 2, e.g. in the form of the speckle pattern 300 captured by the camera system 208 described above, which represents in this case the sound emitted by the first noise source 180.

A second operation 402 may comprise providing reference data representing the sound using the optical signal.

A third operation 403 may comprise receiving, at a second time after the first time, a first audio signal representing the sound emitted by the remote sound source. The first audio signal may be a transduced version of the sound wave 182 emitted by the first noise source 180 and produced by the one or more microphones 210.

A fourth operation 404 may comprise providing a target audio signal, representing a modified version of the first audio signal, based at least in part on the reference data and the time delay *Δt* between the first time and the second time.

A fifth operation 405 may comprise outputting the target audio signal at, or momentarily after, the second time. The outputting may be performed by the first and second loudspeakers of the headphones 150.

With regard to the second operation 402, the reference data may represent a reference audio signal, which may model (in advance) the first audio signal.

When the first audio signal is received, and the time delay *Δt* computed, the time delay may be used to provide the target audio signal which is output in the fifth operation 405. The time delay *Δt* may be computed based on identifying at least a corresponding part of the reference audio signal and the first audio signal, e.g. using a correlation function. As another example, the time delay *Δt* may at least partly be determined based on the calculation of the expected arrival time of a sound wave from the distance corresponding to the vibrating surface and the speed of sound in the environment.

With regard to the fourth operation 404, this may comprise modifying the first audio signal based on corresponding parts of the reference audio signal, i.e. those parts which align based on knowledge of the time delay *Δt*.

For example, for noise cancellation, the optical signal 206 may represent unwanted noise from the first noise source 180. The optical signal 206 is received by the camera system 208 in advance of the corresponding first audio signal 182 received by the one or more microphones 210. The optical signal 206 is converted into reference data, which may be in the form of a reference audio signal which models the first audio signal 182 in advance of its reception. Upon receipt of the first audio signal 182, and computation of a time delay *Δt* between reception of the optical signal 206 and the first audio signal 182, the reference audio signal is ready for use as a form of cancellation signal; that is, the first audio signal 182 and the reference audio signal can be aligned in time using the time delay *Δt* and the reference audio signal subtracted from the first audio signal to produce the target audio signal.

In this way, unwanted noise from the first noise source 180 is reduced or eliminated with near-zero latency because the reference audio signal is computed in advance of receiving the first audio signal 182. Only a very small time period may be needed for computing the time delay *Δt* and the modification or output can then catch-up.

This can deal with dynamic/quick noise changes very efficiently.

The target audio signal is then output by the first and second loudspeakers of the headphones 150.

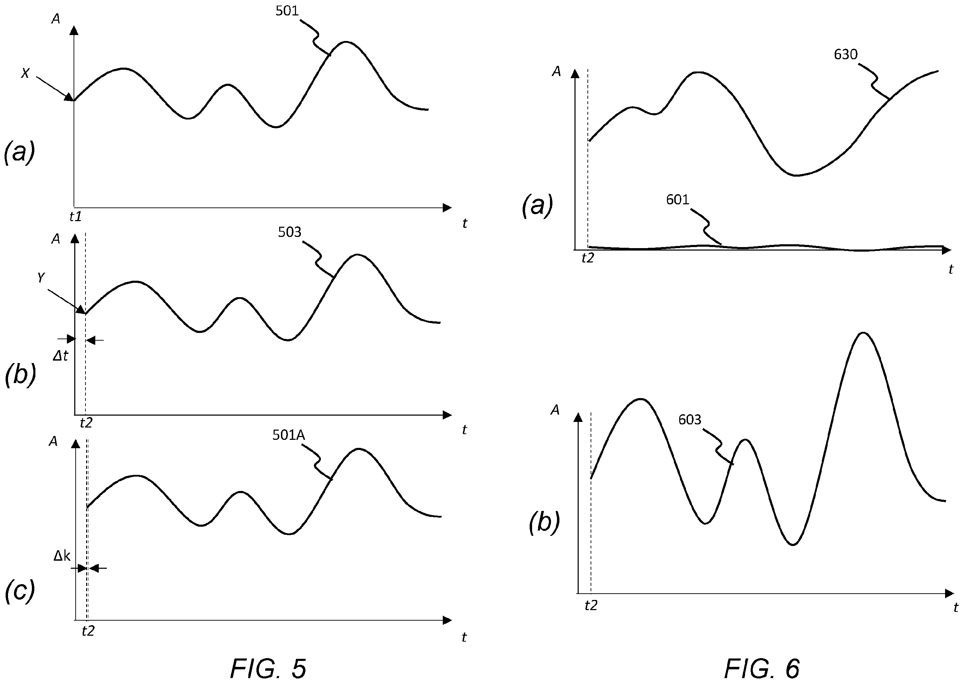

To illustrate, FIG. 5a shows an example of a reference audio signal 501 produced based on converting a received optical signal 206, e.g. as represented by the speckle pattern 300, into a time domain audio signal captured by the camera system 208 at a first time *ti.*

FIG. 5b shows a corresponding first audio signal 503 received by the one or more microphones 210 at a second, later time *t₂.*

A correspondence between an initial part "X" of the reference audio signal 501 and an initial part "Y" of the first audio signal 503 may be identified, e.g. using a correlation function or similar. A time delay *Δt* = *t2* - *t1* may be determined between the corresponding signal parts X and Y.

FIG. 5c shows how the reference audio signal, here denoted 501A, may be aligned to start at *t2* (using the time delay *Δt*) for modifying the first audio signal 503 at, or momentarily after, *t2* which accounts for a small time period *Δk* that may be needed to correlate the corresponding signal parts X and Y and determine the value of *Δt.*

Referring to FIG. 6a, in the case of noise cancellation, subtracting the aligned reference audio signal 501A from the first audio signal 503 produces a new noise-cancelled audio signal 601 for output by the one or more loudspeakers of the headphones 150. This noise-cancelled audio signal 601 may represent, or be included in, a target audio signal for output. In the ideal case, the noise-cancelled audio signal 601 will have a zero amplitude along the time axis. However, in reality, the reference audio signal 501A may not be exactly the same as the first audio signal 503 and hence the shown noise-cancelled audio signal 601 is non-zero at times but with significantly reduced amplitude.

This noise cancellation can be performed with zero or near-zero latency given that the reference signal is known in advance of receiving the first audio signal 501.

In other examples, consider the situation where sounds from multiple sound or noise sources are received. For example, with reference to FIG. 1, the first noise source 180 may produce unwanted sounds and the second sound source 190 may produce wanted sounds, e.g., speech which is of interest to the first user 160.

We may consider the waveforms shown in FIGs. 5a - 5c (representing the reference audio signal 501, the first audio signal 503 and the aligned reference signal 501A) in relation to the first noise source 180 for noise cancellation. When the aligned reference signal 501A is removed from a received audio signal that comprises sound signals from both the first noise source 180 and the second (wanted) sound source 190, a second audio signal 630 is produced in which the first noise source is largely removed, but the second sound signal remains.

Referring to FIG. 6b, in the case of audio enhancement, adding the aligned reference audio signal 501A to the first audio signal 503 produces a new, target audio signal 603 for output by the one or more loudspeakers of the headphones 150. This addition increases the first audio signal amplitude, e.g. by doubling it or scaling it by another amount.

This audio enhancement can also be performed with zero or near-zero latency given that the reference audio signal 501A is known in advance of receiving the first audio signal 503.

Other modifications that may be performed include filtering the reference audio signal 501A using one or more predetermined filter characteristics, e.g. equalizing filter characteristics. In this case, audio enhancement may be performed by combining corresponding parts of the filtered reference audio signal 501A and the first audio signal 503.

The camera system 208 may comprise any system suitable for visual vibrometry. An example camera system 208 that uses first and second camera sensors is described in Sheinin, Mark et al, Dual-Shutter Optical Vibration Sensing, Proceedings of the IEEE/CVF Conference on Computer Vision and Pattern Recognition (CVPR), 2022, pp. 16303-16312, the contents of which are incorporated by reference. The paper also describes decoding of the produced imaging data to produce what we describe as the reference data or reference audio signal. Usually, capture of low-amplitude, high-frequency vibrations requires a highspeed video camera with appropriate lighting.

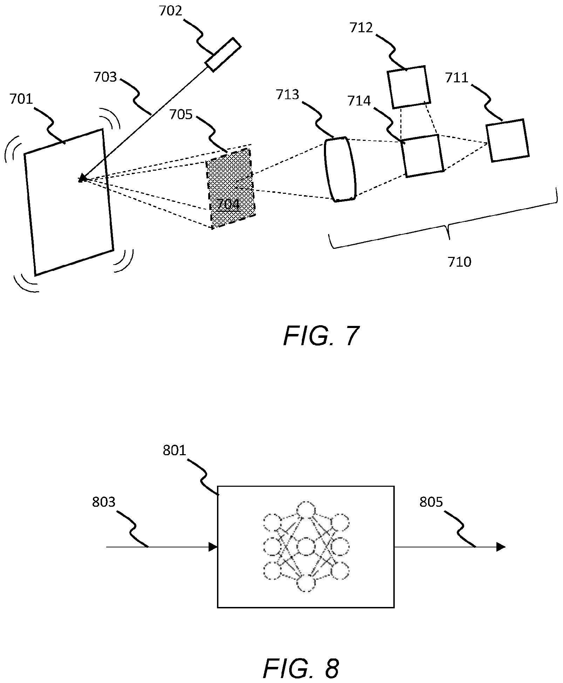

In overview, and with reference to FIG. 7, a vibrating surface 701 (due to pressure waves corresponding to unwanted noise) may be illuminated by a coherent light source 702, e.g. with a laser beam 703. A camera system 710, which may be the camera system 208 mentioned above, may comprise first and second, relatively low-speed video cameras 711, 712, each for capturing a video of a speckle pattern 704 that varies with vibrations and motions of the vibrating surface 701. The camera system 710 may use one or more lenses 713 for imaging a focal plane 705 between the vibrating surface 701 and the camera system. The first video camera 711 may have a rolling shutter sensor for capturing sequential rows or columns of pixels representing the speckle pattern 704. The second video camera 712 may have a global shutter sensor for simultaneously capturing pixels representing reference frames of all or at least a majority of the same speckle pattern 704. Relaying optics 714 may direct the imaged speckle pattern 704 to the first and second video cameras 711, 712 as shown.

The reference data, and therefore the reference audio signal as mentioned above, may be determined by comparing the captured row or column pixels and the simultaneously captured reference frame pixels within a common time frame.

In this setup, the first video camera 711 has a lower frame rate, e.g. at or in the region of 60 frames per second, than the second video camera 712, e.g. at or in the region of 130 frames per second.

In operation, both the first and second video cameras 711, 712 capture video streams simultaneously. The first video camera 711 samples the speckle pattern row-by-row (one dimensional measurements) with a relatively high frequency of, for example, 63 KHz (although at a lower frame rate) whereas the second video camera 712 samples all (or the majority of the) speckle pattern 704 at once, at a higher frame rate to provide reference frames. The second video camera 712 provides two dimensional images, or reference frames, of the undistorted speckle pattern. The reference frames can be used to decode two dimensional shifts from the one dimensional first video camera 711 measurements.

The two dimensional shifts may be decoded to produce the reference data or reference signal described above.

The FIG. 7 camera system 710 may also be used to distinguish optical signals emanating from different audio sources, e.g. the first and second noise sources 180, 190 shown in FIG. 1. This assumes a coherent light source is directed at both and the respective optical signals can be received by the camera system 710. However, example embodiments are not limited to use of the FIG. 7 camera system 710 and any camera system and decoding algorithms used in visual vibrometry may be used.

FIG. 8 shows a machine-learned (ML) model 801 which may be used for some example embodiments. The ML model 801 may be configured to receive, as input on an input path 803, at least the above-mentioned reference audio signal 501 and to generate, as output on an output path 805, either a modifying signal based on the reference audio signal or the target audio signal 601, 603 as described above. The modifying signal may be based on the reference audio signal which may be subtracted from, or combined with, corresponding parts of the first audio signal 503 based on the time delay *Δt* to produce the target audio signal.

Where the ML model 801 is configured to generate the target audio signal 601, 603, the ML model 801 may be trained using training data comprising mappings between reference audio signals representing a plurality of optically-received sounds and required target audio signals corresponding to the respective reference audio signals.

### Example Apparatus

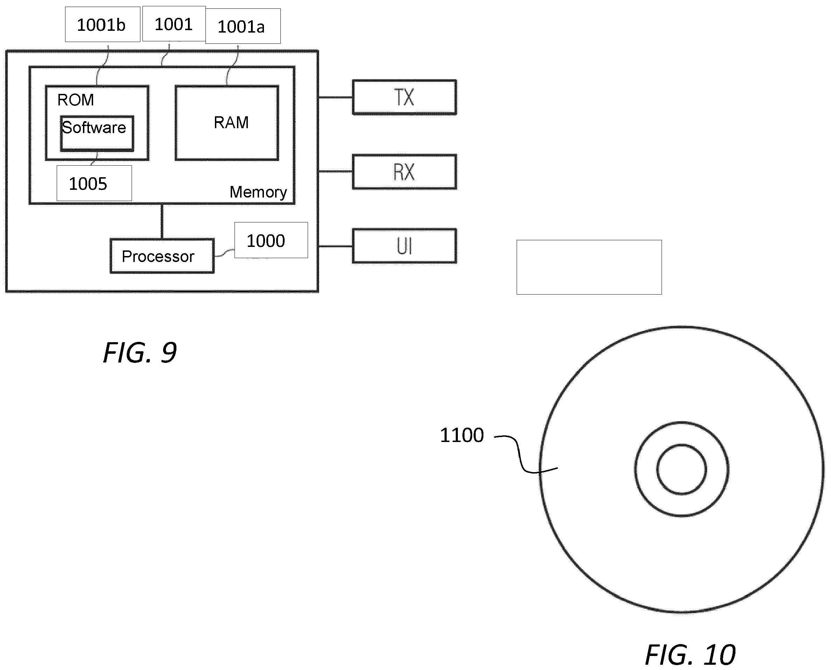

FIG. 9 shows an apparatus according to some example embodiments. The apparatus may be configured to perform the operations described herein, for example operations described with reference to any disclosed process. The apparatus comprises at least one processor 1000 and at least one memory 1001 directly or closely connected to the processor. The memory 1001 includes at least one random access memory (RAM) 1001a and at least one read-only memory (ROM) 1001b. Computer program code (software) 1005 is stored in the ROM 1001b. The apparatus may be connected to a transmitter (TX) and a receiver (RX). The apparatus may, optionally, be connected with a user interface (UI) for instructing the apparatus and/or for outputting data. The at least one processor 1000, with the at least one memory 1001 and the computer program code 1005 are arranged to cause the apparatus to at least perform at least the method according to any preceding process, for example as disclosed in relation to the flow diagram of FIG. 4 and related features thereof.

FIG. 10 shows a non-transitory media 1100 according to some embodiments. The non-transitory media 1100 is a computer readable storage medium. It may be e.g. a CD, a DVD, a USB stick, a blue ray disk, etc. The non-transitory media 1100 stores computer program instructions, causing an apparatus to perform the method of any preceding process for example as disclosed in relation to the flow diagram of FIG. 4 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for receiving, at a first time, an optical signal representing a sound emitted by a remote sound source;
means for providing reference data representing the sound using the optical signal;
means for receiving, at a second time after the first time, a first audio signal representing the sound emitted by the remote sound source;
means for providing a target audio signal, representing, or including, a modified version of the first audio signal, based at least in part on the reference data and the time delay between the first time and the second time; and
means for outputting the target audio signal at, or momentarily after, the second time.

2. The apparatus of claim 1, wherein the reference data represents a reference audio signal and wherein the time delay is computed based on identifying a corresponding part of the reference audio signal and the first audio signal.

3. The apparatus of claim 1 or claim 2, wherein the reference data represents a reference audio signal and wherein the providing means is configured to modify the first audio signal based on corresponding parts of the reference audio signal to represent, or include in, the target audio signal.

4. The apparatus of claim 3, wherein the apparatus is configured to perform noise cancellation by the providing means generating, based on the reference audio signal, a cancellation signal and subtracting corresponding parts of the cancellation signal from the first audio signal to represent, or include in, the target audio signal.

5. The apparatus of claim 3, wherein the providing means is configured to perform audio enhancement by combining corresponding parts of the reference audio signal and the first audio signal to provide the target audio signal.

6. The apparatus of claim 3, further comprising means for filtering the reference audio signal using one or more predetermined filter characteristics, and wherein the providing means is considered to perform audio enhancement by combining corresponding parts of the filtered reference audio signal and the first audio signal.

7. The apparatus of any of claims 3 to 6, further comprising means for receiving a second audio signal representing sound emitted by a second remote sound source, and wherein the target audio signal comprises a mix of the second audio signal and the modified first audio signal.

8. The apparatus of claim 1, wherein the providing means comprises a machine-learned, ML, model configured to receive, as input, at least the reference audio signal and to generate, as output, either:
(i) a modifying signal based on the reference audio signal for being subtracted from, or combined with, corresponding parts of the first audio signal based on the time delay to produce the target audio signal; or
(ii) the target audio signal.

9. The apparatus of claim 8, wherein the ML model is configured to generate the target audio signal, wherein the ML model is trained using training data comprising mappings between:
(i) reference audio signals representing a plurality of optically-received sounds;
(ii) required target audio signals corresponding to the respective reference audio signals.

10. The apparatus of any preceding claim, wherein the means for receiving the optical signal comprises at least one camera for capturing a speckle pattern representing the sound emitted by the remote sound source.

11. The apparatus of claim 10, wherein the means for receiving the optical signal comprises first and second cameras, each for capturing a video of the speckle pattern representing the sound emitted by the remote sound source, the first camera having a rolling shutter sensor for capturing sequential rows or columns of pixels representing the speckle pattern and the second camera having a global shutter sensor for simultaneously capturing pixels represent reference frames of at least a majority of the speckle pattern, the reference audio signal being determined based on comparing the captured row or column pixels and the simultaneously captured reference frame pixels within a common time frame.

12. The apparatus of claim 11, wherein the first camera has a lower frame rate than the second camera.

13. The apparatus of claim 12, wherein the first camera has a frame rate of, or in the region of, 6o frames per second and the second camera has a frame rate of, or in the region of, 130 frames per second.

14. The apparatus of any of claims 10 to 13, further comprising means for illuminating the remote sound source with a laser beam for producing the speckle pattern representing the sound emitted by the remote sound source.

15. A method, comprising:
receiving, at a first time, an optical signal representing a sound emitted by a remote sound source;
providing reference data representing the sound using the optical signal;
receiving, at a second time after the first time, a first audio signal representing sound emitted by the remote sound source;
providing a target audio signal, representing, or including, a modified version of the first audio signal, based at least in part on the reference data and the time delay between the first time and the second time; and
outputting the target audio signal at, or momentarily after, the second time.
